# EUROPEAN PATENT APPLICATION

(11) **EP 1 400 436 A2**
(43) Date of publication of application: **24.03.2004**
(21) Application number: 03255863.7
(22) Date of filing: 18.09.2003
(51) Int. Cl.: B62D 21/15

(54) **Selectively pressurized structural member for vehicle body and frame assembly**

(30) Priority: 23.09.2002 US 412848 P
(71) Applicant: DANA CORPORATION, Toledo, OH 43606 (US)
(72) Inventor: Valdez, Juan F., Reading, PA 19601 (US)
(74) Representative: Giles, Ashley Simon

(57) **Abstract**

A vehicle body and frame assembly includes a closed channel structural member having an interior portion that can be pressurized under certain conditions, such as during a collision, to provide increased strength and absorb energy. A pressurizing device (23) communicates with the interior portion (21) and contains a quantity of a chemical material that, when properly excited, will expand rapidly into a gaseous form. An igniter or other structure is provided for exciting the chemical material contained within the pressurizing device under predetermined conditions, such as when a collision occurs. The expansion of the chemical material into a gaseous form rapidly increases the air pressure within the closed channel structural member (13), thus providing additional strength thereto to absorb energy during the collision. Although deformation of the closed channel structural member may occur as a result of the expansion of the chemical material, it is the containment of the highly pressurized gases within the closed channel structural member that increases the strength thereof during the collision.

## Description

### BACKGROUND OF THE INVENTION

This invention relates in general to body and frame assemblies for vehicles. In particular, this invention relates to an improved structure for a closed channel structural member for use in such a vehicle body and frame assembly that includes an interior portion that can be selectively pressurized under certain conditions, such as during a collision, to provide increased strength and absorb energy.

Many land vehicles in common use, such as automobiles, vans, and trucks, include a body and frame assembly that is supported upon a plurality of ground-engaging wheels by a resilient suspension system. The structures of known body and frame assemblies can be divided into two general categories, namely, separate and unitized. In a typical separate body and frame assembly, the structural components of the body portion and the frame portion of the vehicle are separate and independent from one another. When assembled, the frame portion of the assembly is resiliently supported upon the vehicle wheels by the suspension system and serves as a platform upon which the body portion of the assembly and other components of the vehicle can be mounted. Separate body and frame assemblies of this general type are found in most older vehicles, but remain in common use today for many relatively large or specialized use modem vehicles, such as large vans, sport utility vehicles, and trucks. In a typical unitized body and frame assembly, the structural components of the body portion and the frame portion are combined into an integral unit that is resiliently supported upon the vehicle wheels by the suspension system. Unitized body and frame assemblies of this general type are found in many relatively small modem vehicles, such as automobiles and minivans.

Traditionally, the various components of vehicular body and frame assemblies have been formed from open channel structural members, i.e., structural members that have a non-continuous cross sectional shape (such as U-shaped or C-shaped channel members, for example). For example, it is known to use one or more open channel structural members to form the side rails, the cross members, and other components of a ladder frame type of separate body and frame assembly. However, the use of open channel structural members to form the various components of vehicular body and frame assemblies has been found to be undesirable for several reasons. To address this, it has been proposed to form one or more of the components of the vehicular body and frame assemblies from closed channel structural members, i.e., structural members that have a continuous cross sectional shape (such as tubular or box-shaped channel members, for example). This cross sectional shape is advantageous because it provides strength and rigidity to the vehicle body and frame component. Also, closed channel structural members are well suited to be deformed to a desired shape by hydroforming, which is a well known process that uses pressurized fluid supplied within the closed channel structural member to deform it into conformance with a surrounding die. Hydroforming has been found to be a desirable forming process because portions of the closed channel structural member can be quickly and easily deformed to have a complex cross sectional shape.

Each of the various components of the vehicular body and frame assembly is designed in such a manner as to possess a predetermined amount of strength and rigidity so as to adequately support loads that are placed thereon during operation of the vehicle. When designing the structures of such components, consideration is usually given not only to the relatively small magnitudes of loads that are typically encountered during normal operating conditions of the vehicle, but also to the relatively large magnitudes of loads that might be encountered during extreme operating conditions of the vehicle, such as might occur during a collision. In order to provide maximum safety to the occupants of the vehicle, it is known to design some of all of the components of the vehicular body and frame assembly in such a manner as be capable of accommodating the relatively large magnitudes of the loads that might be encountered during extreme operating conditions of the vehicle. However, by designing these components in this manner, undesirable weight and cost is added to the overall vehicle body and frame assembly, which is inefficient in several regards. Furthermore, in many instances, this additional weight and expense unnecessary because most vehicles are not involved in collisions or operated under other such extreme operating conditions. Thus, it would be desirable to provide an improved structure for a closed channel structural member for use in a vehicle body and frame assembly that is designed to adequately support the relatively small magnitudes of loads that are typically encountered during normal operating conditions of the vehicle, but can be selectively strengthened to accommodate relatively large magnitudes of loads if and when the vehicle encounters extreme operating conditions, such as might occur during a collision.

### SUMMARY OF THE INVENTION

This invention relates to an improved structure for a closed channel structural member for use in a vehicle body and frame assembly that includes an interior portion that can be selectively pressurized under certain conditions, such as during a collision, to provide increased strength and absorb energy. The closed channel structural member defines an enclosed interior portion or air space. A pressurizing device communicates with the interior portion and contains a quantity of a chemical material that, when properly excited, will expand rapidly into a gaseous form. An igniter or other structure is provided for exciting the chemical material contained within the pressurizing device under predetermined conditions, such as when a collision occurs. The expansion of the chemical material into a gaseous form rapidly increases the air pressure within the closed channel structural member, thus providing additional strength thereto to absorb energy during the collision. Although deformation of the closed channel structural member may occur as a result of the expansion of the chemical material, it is the containment of the highly pressurized gases within the closed channel structural member that increases the strength thereof during the collision.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is an exploded perspective view of a vehicle body and frame assembly including a closed channel structural member and a pressurizing device for selectively pressurizing the interior of the closed channel structural member under certain conditions in accordance with this invention.
Fig. 2 is an enlarged perspective view of a portion of the closed channel structural member and the pressurizing device illustrated in Fig. 1.
Fig. 3 is a further enlarged sectional elevational view of the portion of the closed channel structural member and the pressurizing device illustrated in Figs. 1 and 2.
Fig. 4 is a further enlarged sectional elevational view of the pressurizing device illustrated in Figs. 1, 2, and 3.
Fig. 5 is a block diagram of a control system for selectively actuating the pressurizing device illustrated in Figs. 1 through 4.
Fig. 6 is an enlarged perspective view similar to Fig. 2 showing the closed channel structural member after actuation of the pressurizing device.
Fig. 7 is an enlarged perspective view similar to Fig. 6 showing the closed channel structural member after actuation of the pressurizing device and after it has been subjected the relatively large magnitudes of loads that might be encountered during extreme operating conditions of the vehicle, such as might occur during a collision.

### DETAILED DESCRIPTION OF THE PREFERRED EMBODIMENT

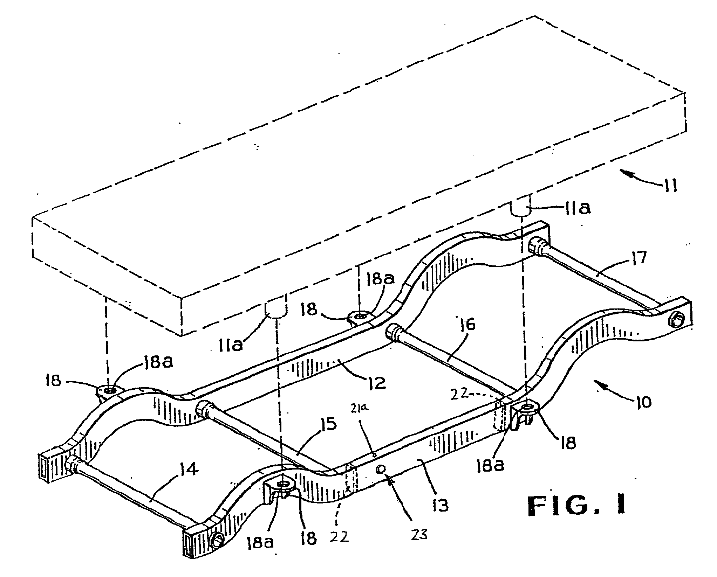

Referring now to the drawings, there is illustrated in Fig. 1 a portion of a vehicular body and frame assembly in accordance with this invention. The illustrated vehicular body and frame assembly is, in large measure, conventional in the art and is intended merely to illustrate one environment in which this invention may be used. Thus, the scope of this invention is not intended to be limited for use with the specific structure for the vehicular body and frame assembly illustrated in Fig. 1 or with vehicular body and frame assemblies in general. On the contrary, as will become apparent below, this invention may be used in any desired environment for the purposes described below.

The illustrated vehicular body and frame assembly is a separate type of body and frame assembly, including a frame portion, indicated generally at 10, and a body portion, indicated generally at 11. The illustrated frame portion 10 of the vehicular body and frame assembly is a ladder type frame portion, including a pair of longitudinally extending side rails 12 and 13 having a plurality of transverse cross members 14, 15, 16, and 17 extending therebetween. The side rails 12 and 13 extend longitudinally throughout the entire length of the frame portion 10 and are generally parallel to one another. Each of the side rails 12 and 13 in the illustrated embodiment is formed from a single closed channel structural member having an upper wall, a lower wall, and a pair of side walls. However, it is known that one or both of the side rails 12 and 13 may be formed from a plurality of individually formed closed channel structural members that are secured together by any conventional means, such as by welding, riveting, bolting, and the like. Furthermore, it is known that portions of the side rails 12 and 13 may be formed from open channel structural members.

The cross members 14 through 17 extend generally perpendicular to the side rails 12 and 13 and may be formed having any conventional structure. The cross members 14 through 17 are spaced apart from one another along the length of the frame portion 13 and can be secured to the side rails 12 and 13 by any conventional means, such as by welding, riveting, bolting, and the like. When secured to the side rails 12 and 13, the cross members 14 through 17 provide lateral and torsional rigidity to the frame portion assembly 10 of the vehicular body and frame assembly.

A plurality of body mount support brackets 18 are provided on the vehicle frame assembly 10. The illustrated body mount support brackets 18 are stamped members that are secured to the side rails 12 and 13 of the vehicular body and frame assembly 10 by any conventional means, such as by welding, adhesives, and the like. The body mount support brackets 18 are provided to facilitate the connection of the body portion 11 and other various components (not shown) of the vehicle to the vehicular body and frame assembly 10. To accomplish this, each of the body mount brackets 18 has an opening 18a formed therethrough. The openings 18a are sized in accordance with respective body mounts 11a provided on the body portion 11 of the vehicular body and frame assembly 10. In a manner that is well known in the art, the body mounts 11a are received and supported within the openings 18a of the body mount support brackets 18 to connect the body portion 11 to the frame portion 10.

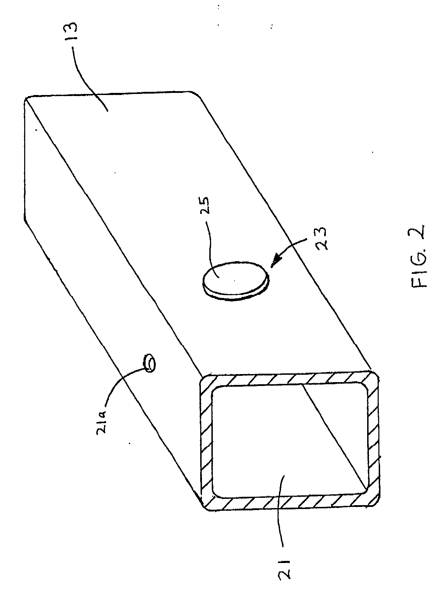

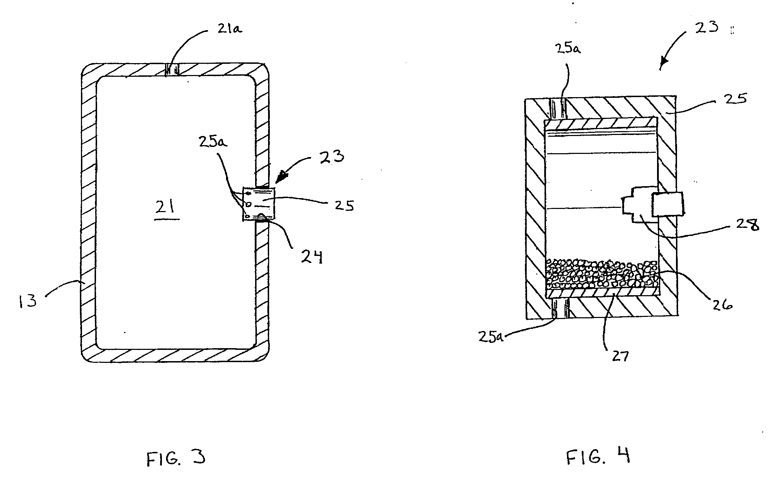

The upper wall, the lower wall, and the pair of side walls of the closed channel side rail 13 define a hollow interior portion 21, as best shown in Figs. 2 and 3. The longitudinal extent of this interior portion 21 within the side rail 13 can, if desired, be limited by a pair of internal plates 22, such as are shown in dotted lines in Fig. 1. The plates 22 can be secured to the inner surfaces of the side rail 13 by any conventional means, such as by welding, riveting, bolting, and the like. The plates 22 can cooperate with the upper wall, the lower wall, and the pair of side walls of the closed channel side rail 13 to define the interior portion 21 of the side rail in an air-tight manner, although such is not required. If desired, the interior portion 21 of the side rail 13 may be vented to the atmosphere by one or more vent holes, such as shown at 21a. The purpose for such vent holes 21a will be described below.

The interior portion 21 may be provided at any desired location within the side rail 13, and multiple interior portions 21 may be provided at different locations within the side rail 13 if desired. A similar interior portion (not shown), or a plurality of similar interior portions, may be provided within the other side rail 12, the cross members 14 through 17, or any other structural member of the frame portion 10 of the vehicular body and frame assembly. Furthermore, this invention may be practiced by providing similar interior portions within any of the structural members of a unitized body and frame assembly, such as described above.

A pressurizing device, indicated generally at 23, communicates with the interior portion 21 of the side rail 13 for the purpose of selectively increasing the magnitude of the fluid pressure therein under certain conditions. In the illustrated embodiment, the pressurizing device 23 is supported within an opening 24 formed through the side rail 13, although such is not required. The illustrated pressurizing device 23 may be secured to the side rail 13 by any conventional means, such as by welding, riveting, bolting, and the like. If desired, a plurality of such pressurizing devices 23 may communicate with the interior portion 21 of the side rail 13.

The structure of the pressurizing device 23 is shown in detail in Fig. 4. As shown therein, the pressurizing device 23 includes a hollow housing 25 having a plurality of apertures 25a formed about the peripheral thereof. The apertures 25a are provided such that the interior of the housing 25 of the pressurizing device communicates with the interior portion 21 of the side rail 13. The pressurizing device 23 also includes a quantity of a material 26 that is disposed within the interior of the housing 25. The material 26 can be embodied as any material that, when properly excited, expands or changes state rapidly so as to cause a rapid increase in the volume thereof. The purpose for such material 26 will be discussed further below. If desired, a liner 27 may be provided within the interior of the housing 25 of the pressurizing device 23 to cover the apertures 25a. The liner 27 can not only prevent the material 26 within the housing 25 from falling out through the apertures 25a, but also can prevent the entry of dirt, water, and other contaminants within the housing 25 through such apertures 25a. The pressurizing device 23 further includes an igniter 28 or other actuating mechanism that communicates with the interior of the housing 25. The igniter 28 can be embodied as any conventional device that can selectively excite or otherwise cause the material 26 disposed within the housing 25 to expand or change state rapidly so as to cause a rapid increase in volume.

For example, the pressurizing device 23 can be embodied as an air bag inflator of the type that is generally used in the steering columns of vehicles as a safety device. In a typical an air bag inflator, the material 26 contained within the housing 25 of the pressurizing device 23 can, for example, be sodium azide (NaN₃) that is mixed with an oxidizer, such as iron oxide Fe₂O₃ cupric oxide CuO or molybdenum disulfide MoS₂, and the igniter 28 can be embodied as a conventional pyrotechnic device. Under normal circumstances, the sodium azide material 26 is quite stable. When actuated, the igniter 28 can detonate a small amount of a conventional igniter compound. The heat from this ignition starts the reaction of the sodium azide with the oxidizer. As a result, a large volume of nitrogen gas is rapidly generated. This volume of nitrogen gas rapidly increases the magnitude of the fluid pressure within the interior portion 21 of the side rail 13. Consequently, the strength and rigidity of the side rail 13 is rapidly increased in the vicinity of the interior portion 21

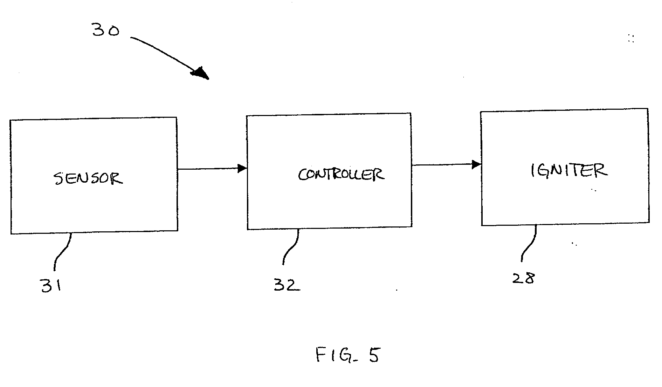

Fig. 5 is a block diagram of a control system, indicated generally at 30, for selectively actuating the igniter 28 of the pressurizing device 23 in the manner described above. As shown therein, the control system 30 includes a sensor 31 that generates an output signal to a controller 32. The sensor 31 can be embodied as any conventional sensor for detecting any desired operating condition of the vehicle in which the vehicular body and frame assembly is provided. For example, the sensor 31 can be an impact sensor that generates an electrical signal to the controller 32 when a portion of the vehicle is impacted, such as during a collision. Alternatively, the sensor 31 can be a remote sensor (radar, for example) that generates an electrical signal to the controller 32 in advance of an imminent collision. The sensor 31 may be provided on the frame portion 10 of the vehicular body and frame assembly or elsewhere on the vehicle as desired. The controller 32 can be responsive to the generation of the signal from the sensor 31 for actuating the igniter 28. To accomplish this, the controller 32 is responsive to the generation of the signal from the sensor 31 for generating a signal to the igniter 28, causing it to be actuated. The controller 32 can be embodied as any one of a variety of well known microprocessors or programmable controllers that are commonly available in the market.

When the igniter 28 is actuated in this manner, the gas that is released expands rapidly within the housing 25 of the pressurizing device 23. Such gas breaks through the liner 27 and enters into the interior portion 21 of the side rail so as to rapidly increase the magnitude of the fluid pressure therein. Such fluid pressure increase causes increased forces to be exerted on the inner surfaces of the side rail 13, thereby functioning to strengthen the side rail 13 at the location of the interior portion 21. If provided as described above, the vent hole 21a can allow a portion of the gas within the interior portion 21 of the side rail 13 to escape therethrough, thereby limiting the amount of increase of the ambient pressure therein and allowing the gas to escape from the interior portion 21 after a predetermined period of time. The size of the vent hole 21a can be adjusted to control these parameters.

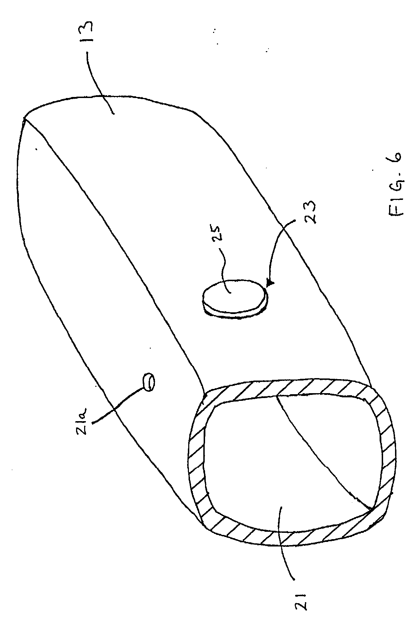

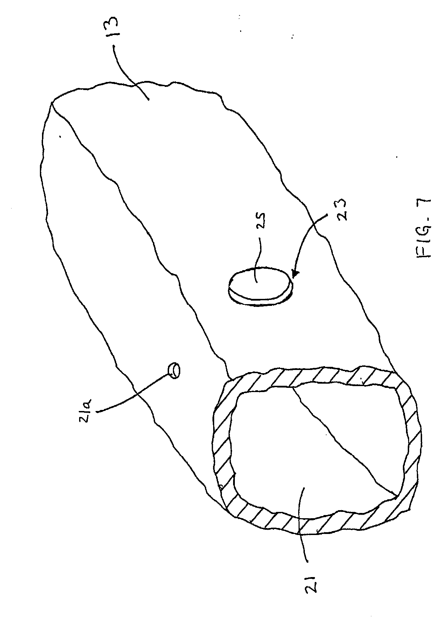

If desired, the fluid pressure within the interior portion 21 of the side rail 13 can be increased to such a magnitude as to cause deformation of a portion of the side rail 13 prior to impact. Such a situation is illustrated in Fig. 6. As shown therein, a portion of the side rail 13 has been expanded outwardly as a result of the increase in the fluid pressure within the interior portion 21 thereof. Such expansion can be designed to provide additional strength to the portion of the side rail 13. Thereafter, as shown in Fig. 7, the side rail 13 can be deformed in a controlled manner after a collision. Such deformation functions to absorb energy during a collision, thereby providing additional safety to the occupants of the vehicle.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A vehicle frame assembly comprising:
a plurality of structural members that are secured together to form a vehicle frame assembly, wherein at least one of said plurality of structural members defines a interior portion; and
a pressurizing device that communicates with said interior portion and is responsive to a predetermined condition for increasing the magnitude of pressure in said interior portion.

2. The vehicle frame assembly defined in Claim 1 wherein said plurality of structural members includes a pair of side rails and a plurality of cross members that are connected together to form a ladder frame assembly, and wherein said at least one of said plurality of structural members is one of said pair of side rails.

3. The vehicle frame assembly defined in Claim 1 wherein said at least one of said plurality of structural members is a closed channel structural member.

4. The vehicle frame assembly defined in Claim 3 wherein a pair of internal plates is provided within said closed channel structural member to define said interior portion.

5. The vehicle frame assembly defined in Claim 1 wherein said pressurizing device is supported within an opening formed through said at least one of said plurality of structural members.

6. The vehicle frame assembly defined in Claim 5 wherein said pressurizing device is secured to said at least one of said plurality of structural members.

7. The vehicle frame assembly defined in Claim 1 wherein said pressurizing device includes a hollow housing defining an interior and having a plurality of apertures formed therein such that said interior of said housing communicates with said interior portion of said at least one of said plurality of structural members.

8. The vehicle frame assembly defined in Claim 7 wherein said pressurizing device further includes a liner disposed within said interior of said housing to cover said apertures.

9. The vehicle frame assembly defined in Claim 7 wherein said pressurizing device further includes a quantity of a material disposed within said interior of said housing that is capable of expanding or changing state rapidly.

10. The vehicle frame assembly defined in Claim 7 wherein said pressurizing device further includes a liner disposed within said interior of said housing to cover said apertures and a quantity of a material disposed within said interior of said liner that is capable of expanding or changing state rapidly.
